# EUROPÄISCHE PATENTSCHRIFT

(11) **EP 1 524 895 B1**
(45) Veröffentlichungstag und Bekanntmachung des Hinweises auf die Patenterteilung: **11.10.2006**
(21) Anmeldenummer: 03787315.5
(22) Anmeldetag: 26.07.2003
(51) Int. Cl.: A01K 1/01

(54) **KOTFÖRDEREINRICHTUNG FÜR TIERZUCHTBETRIEBE UND VERFAHREN ZUM BETREIBEN EINER SOLCHEN EINRICHTUNG**
FECES-CONVEYING INSTALLATION FOR BREEDING UNITS AND METHOD FOR OPERATING SUCH AN INSTALLATION
DISPOSITIF DE TRANSPORT D'EXCREMENTS POUR EXPLOITATION D'ELEVAGE D'ANIMAUX ET PROCEDE POUR FAIRE FONCTIONNER UN TEL DISPOSITIF

(30) Priorität: 22.11.2002 DE 10254535
(43) Veröffentlichungstag der Anmeldung: 27.04.2005
(73) Patentinhaber: Kühlmann, Josef, 48366 Laer (DE)
(72) Erfinder: Kühlmann, Josef, 48366 Laer (DE)
(74) Vertreter: Habbel, Hans-Georg
(86) Internationale Anmeldenummer: PCT/DE2003/002529
(87) Internationale Veröffentlichungsnummer: WO 2004/047524

(56) Entgegenhaltungen:
- DE-U- 9 101 021
- US-A- 3 119 373
- US-A- 4 023 531
- US-B1- 6 237 536

## Beschreibung

Die Erfindung betrifft eine Kotfördereinrichtung für Tierzuchtbetriebe gemäß dem Oberbegriff des Anspruches 1 und ein Verfahren zum Betreiben einer Kotfördereinrichtung gemäß dem Oberbegriff des Anspruches 6.

Kotfördereinrichtungen für Tierzuchtbetriebe, die aus einem umlaufenden, unterhalb eines Käfigbodens angeordneten, angetriebenen Kotförderband bestehen und wenigstens eine angetriebene Antriebsrolle und wenigstens eine angetriebene Umlenkrolle aufweisen, sind z. B. aus der DE 195 14 574 C1 bekannt. Diese bekannte Einrichtung ist für Geflügelzuchtbetriebe geeignet, wobei Geflügel einen relativ festen, aber feuchten Kot abscheidet.

Bei der Einrichtung gemäß der DE 195 14 574 C1 ergibt sich die Schwierigkeit, daß textile Flächengebilde nur sehr schwer als Förderbänder geführt werden können, sondern stets das Bestreben haben, von den Antriebs- und Umlenkrollen abzugleiten, da aufgrund der Gewebestruktur eine einwandfreie Führung des Bandes nicht möglich ist. Bei dieser bekannten Einrichtung hat man den Geradeauslauf des Bandes dadurch sichergestellt, daß die Umlenkrolle eine höhere Drehzahl aufweist als die Antriebsrolle, wobei Versuche ergaben, daß durch diese Anordnung eine einwandfreie Führung des Kotförderbandes möglich ist.

In der DE 10 96 669 B wird eine Schwemmentmistungseinrichtung beschrieben, bei der unterhalb eines den Standplatz der Stalltiere bildenden Gitterrostes eine vorzugsweise durch Kunststoffplatten abgedeckte schiefe Ebene gebildet wird, auf der ein Schieber gleiten kann, der durch einen Motor mit Hilfe eines Ketten- und Rollenantriebes über die schiefe Ebene bewegt werden kann. Um die Fördereinrichtung für diesen Dungschieber stets gespannt zu halten, ist einer der beiden Drehachsen, insbesondere der für die nicht angetriebenen Laufrollen, eine Spannvorrichtung in Gestalt einer Feder zugeordnet, die auf das Lager der Drehachse wirkt. Hier ist die Umlenkrolle zwar schwimmend gelagert, aber es handelt sich hierbei nicht um eine angetriebene Umlenkrolle.

Bei Tierzuchtanlagen, in denen Tiere gehalten werden, die festen Kot und flüssigen Urin abscheiden, bestehen erhebliche Schwierigkeiten, dieses sehr feuchte, breiige Gemisch abzufördern. Beispielsweise aus der DE 35 28 604 A1 ist eine Entmistungsanlage für Kleintierfarmen bekanntgeworden, die zweiteilig ausgebildet ist, nämlich einerseits aus einem flüssigkeitsdichten Bodenteil besteht, das als Urinsammelrinne dient, wobei oberhalb dieser flüssigkeitsdichten Bodenrinne ein Durchfallrost vorgesehen ist. Dieser Durchfallrost wird durch ein Förderaggregat oder Förderband gebildet, das nicht umlaufend ein Ober- und Untertrum aufweist, sondern aus einer einfachen Schicht eines feuchtigkeitsdurchlässigen Materials besteht, wobei diese Schicht beispielsweise ein gitterartiges Gewebe sein kann.

Der Einsatz einer solchen Anordnung bei Schweinezuchtbetrieben würde sich nicht bewähren, da der hier anfallende feste Kot noch relativ weich ist und durch den Durchfallrost durchfallen würde.

Werden in Schweinezuchtbetrieben Förderbänder zur Abförderung des Kotes eingesetzt, tritt ein sehr schnelles Verschmutzen der eigentlichen Umlenkrollen auf, so daß die Förderbänder seitlich auslaufen. Auch der Versuch, die Antriebs- und/oder Umlenkrolle ballig auszubilden, um damit eine Geradeführung des Förderbandes zu erreichen, hat sich nicht bewährt, da die Verschmutzung zu groß ist und die festen Kotbestandteile die Balligkeit der Umlenk- und Antriebsrolle aufheben.

Auch der Versuch, Umlenk- und/oder Antriebsrolle als Gitterrollen auszubilden, um damit eine entsprechende Führung zu erreichen, hat sich nicht bewährt, da sich dann diese Rollen innerhalb des Gitters außerordentlich schnell zusetzen.

Der Erfindung liegt die Aufgabe zugrunde, eine Kotfördereinrichtung für Tierzuchtbetriebe zu schaffen, bei der ein beliebiges Förderband eingesetzt werden kann, d. h. also ein geschlossenes Band oder ein netzartig offenes Band, bei dem aber sichergestellt ist, daß der Geradeauslauf des Bandes trotz der erheblichen Verschmutzung der Bandunterseite und der Antriebs- und Umlenkrollen garantiert ist.

Diese der Erfindung zugrundeliegende Aufgabe wird durch die Lehre des Anspruches 1 bzw. die des Anspruches 6 gelöst.

Vorteilhafte Ausgestaltungen sind in den Unteransprüchen erläutert.

Mit anderen Worten ausgedrückt wird vorgeschlagen, daß die die Umlenkrolle aufnehmende Antriebseinheit schwimmend, d. h. verstellbar gelagert ist und die Antriebseinheit der Umlenkrolle und damit auch die Umlenkrolle mit einer Stellvorrichtung ausgerüstet ist, die die Spannung des eigentlichen Kotförderbandes sicherstellt.

Bei einer solchen Anordnung ist folgende Antriebsweise möglich:
Die Antriebseinheit der Umlenkrolle wird in gleicher Drehrichtung angetrieben wie die Antriebseinheit der Antriebsrolle. Dies ist der normale Arbeitszustand des Kotförderbandes, d. h. das Band ist gespannt und wird von beiden Rollen in einer Richtung umlaufend angetrieben. Wird nunmehr durch die Stellvorrichtung und durch Verschieben der Antriebseinheit für die Umlenkrolle die Bandspannung gelockert, kann die Umlenkrolle und die Antriebsrolle sich frei drehen und gleichzeitig hat das Band die Möglichkeit, wieder in den Geradeauslauf zurückzukommen, wenn es aus dem Geradeauslauf ausgelaufen ist. Gleichzeitig wird dabei aber auch erreicht, daß durch die Lockerung des Bandes und durch das freie Drehen sowohl der Antriebsrolle wie der Umlenkrolle diese Rollen sich von dem an ihnen anhaftenden Schmutz befreien können.

Bei einer weiteren Möglichkeit der Arbeitsweise wird so vorgegangen, daß dann, wenn die Stellvorrichtung die Bandspannung aufhebt, gleichzeitig die Umlenkrolle entgegengesetzt ihrer normalen Drehrichtung angetrieben wird. Hierdurch wird das Zurückführen des Bandes in den Geradeauslauf erreicht, und auch hier wird ein verbessertes Abwerfen oder Abreinigen des sich an der Umlenkrolle und der Antriebsrolle festsetzenden Kotes bewirkt.

Bei einer dritten Arbeitsweise besteht die Möglichkeit, bei gespanntem Band, d. h. also die Stelleinrichtung hat die Umlenkrolle mit Druck beaufschlagt, trotzdem die Umlenkrolle entgegengesetzt ihrer normalen Drehrichtung anzutreiben. In einem solchen Fall bleibt das Band stehen, die Rollen reinigen sich durch den bewirkenden Leerlauf unter dem Band und gleichzeitig wird eine Zurückführung des Bandes in den Geradeauslauf bewirkt.

Die eigentliche Stellvorrichtung ist vorzugsweise als hydraulische oder pneumatische Kolbenzylinderanordnung ausgebildet, die impulsweise in Tätigkeit setzbar ist.

Die Intervalle, mit denen die Stellvorrichtung betätigt wird, beträgt ggf. nur einige Sekunden, wobei diese Zeitspanne ausreicht, um die Rückstellung des Kotförderbandes zu bewirken und gleichzeitig dadurch auch die Reinigung der Umlenkrolle und der Antriebsrolle sicherzustellen.

Gemäß einer weiteren Ausgestaltung der Erfindung sind sowohl im Bereich der Antriebsrolle als auch im Bereich der Umlenkrolle Führungsschilde beiderseits des Kotförderbandes angeordnet, die ein zu weites Auslaufen des Kotförderbandes verhindern. Diese Führungsschilde bewirken auch dann, wenn das Band seitlich ausgelaufen ist, eine gewisse Spannung oder einen gewissen Rückstelldruck, der dann wirksam wird, wenn die Stellvorrichtung die Bandspannung aufhebt, wobei unabhängig in welcher Drehrichtung nunmehr die Umlenkrolle angetrieben wird, ein sehr schnelles Zurückstellen des Kotförderbandes bewirkt wird.

Gemäß einer weiteren Ausgestaltung der Erfindung ist vorgesehen, daß das Kotförderband mit den Antriebseinheiten auf einem Traggestell angeordnet ist, wobei wenigstens die Antriebseinheit in einem Rasterlager des Traggestelles fest gelagert ist, so daß dadurch Anpassungen an unterschiedliche Bandlängen und damit unterschiedliche Käfiggrößen möglich ist.

Die Erfindung bezieht sich schließlich weiterhin auf ein Verfahren zum Betreiben einer Kotfördereinrichtung für Tierzuchtbetriebe, wobei ein umlaufendes Kotförderband eingesetzt wird, das wenigstens eine Antriebsrolle und wenigstens eine angetriebene Umlenkrolle aufweist. Hierbei wird so vorgegangen, daß die Spannung der Umlenkrolle impulsweise gelockert wird, was dadurch erreichbar ist, daß die eigentliche Antriebseinheit für die Umlenkrolle schwimmend gelagert ist und durch eine Stellvorrichtung druckbeaufschlagt werden kann, die die Bandspannung erzeugt.

Bei dem erfindungsgemäßen Verfahren wird die Stellvorrichtung impulsweise betätigt, so daß die Bandspannung aufgehoben wird. Hierdurch erhält unabhängig davon, in welcher Drehrichtung die Umlenkrolle angetrieben wird, das Band die Möglichkeit wieder in den Geradeauslauf zurückzukehren, was durch die seitlich des Bandes angeordneten Führungsschilde unterstützt wird.

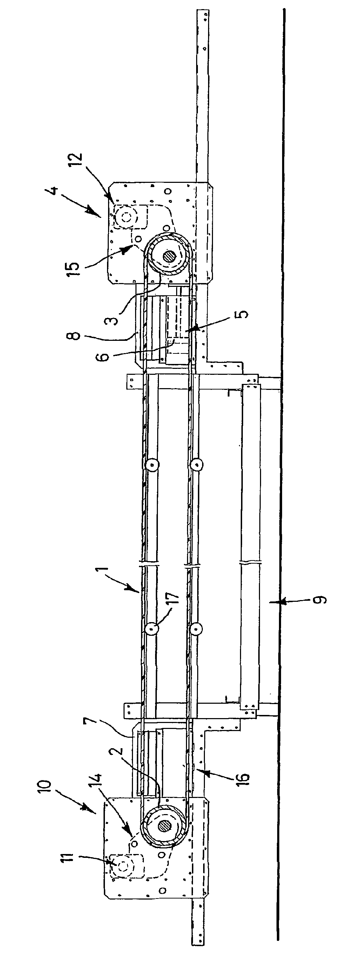

Ein Ausführungsbeispiel der Erfindung wird nachfolgend anhand der Zeichnung erläutert.

In der Zeichnung ist schematisch eine Kotfördereinrichtung dargestellt, die ein Kotförderband 1 aufweist, das über eine Antriebsrolle 2 einer Antriebseinheit 10 geführt ist. Die Antriebseinheit 10 weist einen Antriebsrotor 11 sowie ein entsprechendes Getriebe 14 auf, und diese Antriebseinheit 10 ist auf einem Traggestell 9 über ein Rasterlager 16 gelagert. Diese Antriebseinheit 10 kann daher in Anpassung an die gewünschte Bandlänge und die gewünschte Stallgröße entsprechend eingestellt werden.

Das eigentliche Kotförderband 1 wird über Stützrollen 17 geführt und weist gegenüberliegend der Antriebsrolle 2 eine Umlenkrolle 3 auf. Diese Umlenkrolle 3 ist in einer Antriebseinheit 4 angeordnet, die ein Getriebe 15 und einen Motor 12 besitzt, wobei diese Antriebseinheit 4 schwimmend gelagert ist, d. h. sich gegenüber der Antriebseinheit 10 verschieben kann. Über eine Stellvorrichtung 5, die vorzugsweise als hydraulische Kolbenzylinderanordnung 6 ausgebildet ist, wird die Antriebseinheit 4 unter Druck gesetzt und damit die Bandspannung erreicht.

Die Antriebseinheit 10 mit Motor 11 und Getriebe 14 wird stets in einer Richtung angetrieben und auch die Antriebseinheit 4 wird normalerweise in der gleichen Drehrichtung angetrieben, so daß beide Rollen, d. h. die Antriebsrolle 2 und die Umlenkrolle 3 gleiche Drehrichtung aufweisen. Wird nunmehr die Stellvorrichtung 5 betätigt, d. h. der Druck dieser Stellvorrichtung 5 aufgehoben, läuft die Umlenkrolle 3 theoretisch frei, das Kotförderband 1 hängt durch und nunmehr schiebt sich das Kotförderband 1 wieder in den Geradeauslauf zurück. Gleichzeitig wird der an der Antriebsrolle 2 und der Umlenkrolle 3 anhaftende Kot abgeschrappt und hiermit diese beiden Rollen gereinigt. Die Steuerung der Stellvorrichtung 5 kann impulsweise erfolgen.

Weiterhin ist es möglich, daß, wenn die Stellvorrichtung 5 betätigt wird, gleichzeitig die Umlenkrolle 3 mit ihrer Antriebseinheit umgekehrt angetrieben wird, d. h. gegenläufig zur Umlaufrichtung der Antriebsrolle 2 umläuft. Bei dieser Anordnung erfolgt also sowohl ein Durchhängen des Kotförderbandes 1, ein Rückstellen des Kotförderbandes 1 in den Geradeauslauf und schließlich ein Reinigen der eigentlichen Rollen 2 und 3. Durch die gegenläufige Antriebsweise der Umlenkrolle 3 wird außerdem eine bevorzugte Rückführung des Kotförderbandes 1 erreicht.

Als dritte Möglichkeit besteht die Möglichkeit, impulsweise lediglich die Umlenkrolle 3 zu betätigen, die Bandspannung aber aufrechtzuerhalten. In einem solchen Fall bleibt das Kotförderband 1 stehen, aber die Rollen laufen um und hierdurch erfolgt ein Reinigen der Rollen und auch ein Zurückstellen des Kotförderbandes 1 in den Geradeauslauf.

Sobald die Impulszeitspanne abgelaufen ist, wird die Kolbenzylinderanordnung 6 wieder in Betrieb genommen, das Band gespannt und gleichzeitig der Antrieb für die Umlenkrolle 3 stillgesetzt, d. h. die Umlenkrolle 3 läuft im Leerlauf.

Hierbei ist die Steuerung der Antriebseinheit 4 so gestaltet, daß während der normalen Arbeitszeit der Antrieb der Umlenkrolle 3 so erfolgt, daß die Umlenkrolle 3 in Richtung der Antriebsrolle 2 angetrieben wird.

Beiderseits des Förderbandes sind im Einlaufbereich der Antriebseinheit 10 und der Antriebseinheit 4 sogenannte Führungsschilde 7 und 8 vorgesehen, die an den Seitenkanten des Kotförderbandes 1 anliegen. Gegen diese Führungsschilde 7 und 8 läuft dann, wenn das Band aus der Richtung läuft, die Bandkante an und wird hier gestaucht. Wird nunmehr die Bandspannung durch die Stellvorrichtung 5 gelockert, wird das Kotförderband 1 wieder zurückgeführt, wobei diese Führungsschilde 7 und 8 und die an den Führungsschilden 7 und 8 anliegenden Bandkanten diese Zurückstellung des Bandes 1 unterstützen.

In der Zeichnung ist die Lagerung für die Antriebseinheit 4 auch als Rasterlagerung 16 dargestellt. Hierdurch wird ein vereinfachter Aufbau der Gesamtanlage erreicht, da für beide Bandseiten die gleichen Bauteile eingesetzt werden können.

Die Stellvorrichtung 5 ist doppelt ausgebildet, d. h. auf jeder Seite seitlich des Kotförderbandes 1 greift eine entprechende Stellvorrichtung 5 an, so daß bei Wirksamwerden dieser Stellvorrichtung 5 die Umlenkrolle 3 genau ausgerichtet ist und nicht an der einen oder anderen Seite mehr belastet ist.

## Patentansprüche

1. Kotfördereinrichtung für Tierzuchtbetriebe, bestehend aus einem umlaufenden, unterhalb eines Stallbodens angeordneten, angetriebenen Kotförderband (1) mit wenigstens einer Antriebsrolle (2) und wenigstens einer schwimmend angeordneten, angetriebenen Umlenkrolle (3), **dadurch gekennzeichnet, daß**
a) die Umlenkrolle (3) mit ihrer Antriebseinheit (4) schwimmend angeordnet ist, und
b) eine an der Antriebseinheit (4) angreifenden Stellvorrichtung (5) eine Spannung des Kotförderbandes (1) intermittierend bewirkt.

2. Kotfördereinrichtung nach Anspruch 1, **dadurch gekennzeichnet, daß** die Stellvorrichtung (5) als hydraulische oder pneumatische Kolbenzylinderanordnung (6) ausgebildet ist.

3. Kotfördereinrichtung nach Anspruch 1 oder 2, **dadurch gekennzeichnet, daß** im Bereich der Antriebsrolle (2) und der Umlenkrolle (3) Führungsschilde (7, 8) beiderseits des Kotförderbandes (1) angeordnet sind.

4. Kotfördereinrichtung nach einem oder mehreren der vorhergehenden Ansprüche, **dadurch gekennzeichnet, daß**
a) die Umlaufbewegung der Umlenkrolle (3) der Antriebseinheit (4) gegenläufig zur Umlaufbewegung der Antriebsrolle (2) der Antriebseinheit (10) antreibbar ist und
b) die Stellvorrichtung (5) und die Antriebseinheit (4) in Intervallen steuerbar sind.

5. Kotfördereinrichtung nach einem der vorhergehenden Ansprüche, **dadurch gekennzeichnet, daß** das Kotförderband (1) mit den Antriebseinheiten (10, 4) auf einem Traggestell (9) angeordnet ist.

6. Verfahren zum Betreiben einer Kotfördereinrichtung für Tierzuchtbetriebe mit einem umlaufend angetriebenen, unterhalb eines Stallbodens angeordneten Kotförderband (1) mit wenigstens einer angetriebenen Antriebsrolle (2) und wenigstens einer verschiebaren, angetriebenen Umlenkrolle (3), **dadurch gekennzeichnet, daß** die Umlenkrolle mit ihrer Antriebseinheit (4) in Langsachse des Kotförderbandes verschiebbar ist und durch eine Stellvorrichtung beaufschlagt wird, durch die eine Spannung des Kotförderbandes reguliert wird, wobei die die Spannung des Kotförderbandes erzeugende Stellvorrichtung (5) intermittierend wirksam wird.

7. Verfahren nach Anspruch 6, **dadurch gekennzeichnet, daß** die Umlenkrolle gegenläufig zur Antriebsrolle angetrieben wird und der Antrieb dieser Umlenkrolle und die die Spannung des Kotförderbandes erzeugende Stellvorrichtung zum gleichen Zeitpunkt intermittierend eingeschaltet werden.

8. Verfahren nach Anspruch 6, **dadurch gekennzeichnet, daß** die Umlenkrolle gegenläufig zur Antriebsrolle angetrieben wird, aber die Stellvorrichtung die Bandspannung weiterhin aufrechterhält.

## Claims

1. Faeces conveyor for animal-breeding facilities consisting of a powered circulating conveyor belt (1) located beneath the floor of the shed with at least one drive roller (2) and at least one movable powered deflection roller (3) **characterised in that** a) the deflection roller (3) and its drive unit (4) are located movably and b) that a adjusting device (5) engaging on the drive unit (4) intermittently creates tension of the faeces conveyor belt (1).

2. Faeces conveyor according to claim 1 **characterised in that** the adjusting device (5) takes the form of a hydraulic or pneumatic piston-cylinder arrangement (6).

3. Faeces conveyor according to claims 1 or 2 **characterised in that** guide blades (7, 8) are located on both sides of the conveyor belt (1) in the area of the drive roller (2) and the deflection roller (3).

4. Faeces conveyor according to one or more of the above claims, **characterised in that** a) the rotating movement of the deflection roller (3) of the drive unit (4) can be driven in the opposite direction to the rotating movement of the drive roller (2) of the drive unit (10), and b) the adjusting device (5) and drive unit (4) can be controlled at intervals.

5. Faeces conveyor according to any of the above claims, **characterised in that** the conveyor belt (1) with the drive units (10, 4) is located on one frame (9).

6. Process for operating a faeces conveyor for animal-breeding facilities with a powered circulating conveyor belt (1) located beneath the floor of the shed with at least one drive roller (2) and at least one movable powered deflection roller (3) **characterised in that** the deflection roller with its drive unit (4) can be moved along the lengthwise axis of the faeces conveyor belt and that a adjusting device (5) can be applied to it by means of which the tension of the faeces conveyor belt is regulated, and where the tension of the faeces conveyor belt created by the adjusting device (5) acts intermittently.

7. Process according to claim 6, **characterised in that** the deflection roller is driven in the opposite direction to the drive roller, and that the drive power of the deflection roller and the adjusting device creating the tension of the faeces conveyor belt are switched on intermittently at the same moment.

8. Process according to claim 6, **characterised in that** the deflection roller is driven in the opposite direction to the drive roller, but that the adjusting device continues to maintain the tension of the belt.

## Revendications

1. Dispositif de transport d'excréments pour des élevages d'animaux, composé d'une bande de transport d'excréments rotative entraînée (1), disposée sous le sol de l'étable, avec au moins un rouleau moteur (2) et au moins un rouleau de renvoi (3) disposé de façon flottante, **caractérisé en ce que**
a) le rouleau de renvoi (3) avec son unité d'entraînement (4) est disposé de façon flottante et
b) un dispositif de réglage (5) s'engageant sur l'unité d'entraînement (4) provoque par intermittence une tension de la bande de transport d'excréments (1).

2. Dispositif de transport d'excréments selon la revendication 1, **caractérisé en ce que** le dispositif de réglage (5) est conçu en tant qu'agencement piston/cylindre (6) pneumatique ou hydraulique.

3. Dispositif de transport d'excréments selon la revendication 1 ou 2, **caractérisé en ce que** dans la zone du rouleau moteur (2) et du rouleau de renvoi (3), des lames de guidage (7, 8) sont montées des deux côtés de la bande de transport d'excréments (1).

4. Dispositif de transport d'excréments selon l'une quelconque ou plusieurs des revendications précédentes, **caractérisé en ce que**
a) le mouvement rotatoire du rouleau de renvoi (3) de l'unité d'entraînement (4) peut être entraîné à contre-sens du mouvement rotatoire du rouleau moteur (2) de l'unité d'entraînement (10) et
b) le dispositif de réglage (5) et l'unité d'entraînement (4) sont pilotables à intervalles.

5. Dispositif de transport d'excréments selon l'une ou plusieurs des revendications précédentes, **caractérisé en ce que** la bande de transport d'excréments (1) est disposée avec les unités d'entraînement (10, 4) sur un cadre porteur (9).

6. Procédé d'exploitation d'un dispositif de transport d'excréments pour des élevages d'animaux avec une bande de transport des excréments (1) entraînée en rotation, disposée sous le sol de l'étable, avec au moins un rouleau moteur (2) entraîné et au moins un rouleau de renvoi (3) entraîné en translation, **caractérisé en ce que** le rouleau de renvoi avec son unité d'entraînement (4) est translatable dans l'axe longitudinal de la bande de transport d'excréments et est soumis à un dispositif de réglage qui assure la régulation d'une tension de la bande de transport d'excréments, le dispositif de réglage (5) créant la tension de la bande de transport d'excréments agissant par intermittence.

7. Procédé selon la revendication 6, **caractérisé en ce que** le rouleau de renvoi est entraîné à contre-sens du rouleau moteur et **en ce qu'**on connecte au même moment, par intermittence l'entraînement dudit rouleau de renvoi et le dispositif de réglage créant la tension de la bande de transport des excréments.

8. Procédé selon la revendication 6, **caractérisé en ce que** le rouleau de renvoi est entraîné à contre-sens du rouleau moteur, mais le dispositif de réglage continue à maintenir la tension de la bande.
